# EUROPÄISCHE PATENTSCHRIFT

(11) **EP 1 274 624 B1**
(45) Veröffentlichungstag und Bekanntmachung des Hinweises auf die Patenterteilung: **02.01.2004**
(21) Anmeldenummer: 01929574.0
(22) Anmeldetag: 18.04.2001
(51) Int. Cl.: B64D 11/06

(54) **FAHRZEUGSITZ, INSBESONDERE FLUGGASTSITZ**
VEHICLE SEAT, ESPECIALLY FOR AIRCRAFT
SIEGE POUR VEHICULE, EN PARTICULIER POUR PASSAGER DANS UN AVION

(30) Priorität: 19.04.2000 DE 10019484
(43) Veröffentlichungstag der Anmeldung: 15.01.2003
(73) Patentinhaber: Recaro Aircraft Seating GmbH & Co., 74523 Schwäbisch Hall (DE)
(72) Erfinder: SALZER, Uwe, 88682 Salem (DE); ABT, Hans-Dieter, 74523 Schwäbisch Hall (DE)
(74) Vertreter: Bartels, Martin Erich Arthur
(86) Internationale Anmeldenummer: PCT/EP2001/004388
(87) Internationale Veröffentlichungsnummer: WO 2001/081172

(56) Entgegenhaltungen:
- EP-A- 0 957 025
- DE-C- 19 607 060
- US-A- 2 629 425

## Beschreibung

Die Erfindung betrifft einen Fahrzeugsitz, insbesondere Fluggastsitz, gemäß dem Oberbegriff des Anspruchs 1. Ein derartiger Fluggastsitz ist aus US-A-2 629 425 (Fig. 8) bekannt.

Insbesondere auf sehr lang andauernden Reisen, wie sie bei Langstreckenflügen gegeben sind, aber auch bei Schiffspassagen, beispielsweise mittels Fähren, ist es allgemeine Zielsetzung von Flugzeug- oder Fährschiffsausrüstern, den Komfort der Sitzbenutzer und mithin der zu transportierenden Passagiere zu erhöhen. Insbesondere im First- und Business-Class-Bereich haben die Kunden entsprechende Wunschvorstellungen, die zu realisieren sind. Im Trend liegt dabei auch der Wunsch der Passagiere, die Reisezeit zum sinnvollen Ruhen oder zum Schlafen nutzen zu können, um beispielsweise Ermüdungserscheinungen am Zielort bei Langstreckenflügen od.dgl. wirksam zu begegnen.

Durch die DE 675 982 C ist ein Fluggastsitz bekannt mit einem Stabtragwerk in der Art eines sog. Lenkerparallelogramms. Durch das dahingehende Lenkerparallelogramm ist es möglich, einen höheneinstellbaren Flugzeugführersitz, der gleichzeitig um eine quer zur Flugrichtung angeordnete Achse verschwenkbar ist und der auch eine Längseinstellung ermöglicht, diesen auch um die Querachse in jeder Höhen- oder Längseinstellung gesondert einzustellen. Hierfür ist bei der bekannten Lösung ein oberes starres Stabteil über Gelenkstellen sowohl mit dem Sitzteil als auch mit der Rückenlehne des Fluggastsitzes verbunden. Parallel hierzu erstreckt sich ein unteres starres Stabteil des bekannten Stabtragwerkes von einer Sitzschienen-Längseinstelleinrichtung bis zu weiteren Stabteilen, an denen gelenkig der rückwärtige Bereich der Rückenlehne angreift. Die Verbindung des unteren starren Stabteils mit den genannten Baukomponenten erfolgt gleichfalls über endseitig an dem unteren Stabteil angeordnete Gelenkstellen. Das bekannte Stabtragwerk baut an dem Flugzeugführersitz groß auf, so daß seine Anwendung im Kabinenbereich eines Flugzeuges mit beengten Einbauverhältnissen wenig sinnvoll erscheint. Auch greift das Stabtragwerk derart an den bewegbaren Sitzkomponenten des Flugzeugführersitzes an, daß nur in sehr eingeschränktem Umfang Einstellmöglichkeiten gegeben sind und sich beispielsweise eine Bett- oder Ruhefunktion dergestalt auch nicht erreichen läßt, was im übrigen bei Flugzeugführerbesatzungen auch nicht gewollt wäre. Durch die konkrete konstruktive Ausgestaltung ist das bekannte Stabtragwerk auch nicht in der Lage, im Crashfall die auftretenden Kräfte, die in die Sitzkonstruktion eingeleitet werden, aufzunehmen. Mithin wäre mit einem Versagen der Anordnung im Crashfall zu rechnen.

Durch die nachveröffentlichte EP 1 074 468 A2 ist demgegenüber ein deutlich verbesserter Fluggastsitz offenbart, der das Einnehmen verschiedener Positionen, auch von Ruhepositionen und einer Schlafposition, ermöglicht, bei der die Oberseiten von Rückenlehne, Sitzteil und Beinauflage eine im wesentlichen eben verlaufende Liegefläche ausbilden. Bei dieser Lösung greift im unteren Drittel der Rückenlehne ein längseinstellbares Stabteil an, das mittels einer Betätigungseinrichtung zum Verschwenken der Rückenlehne in verschiedene Positionen ein- und ausfahrbar ist.
Des weiteren ist bei dieser Lösung die Rückenlehne über eine Gelenkstelle im Bereich eines Überganges zwischen ihr und dem Sitzteil an dieser gelenkig angeordnet. Die dahingehende Gelenkstelle im Übergangsbereich ist wiederum in einer im wesentlichen horizontal verlaufenden Längsführung bewegbar, die durch Teile von Armauflagen des Fluggastsitzes gebildet sind, die bei starrer Anordnung beidseitig die Längsseiten des ansonsten in verschiedenen Positionen einstellbaren Fluggastsitzes begrenzen. Sofern eine weitere Betätigungseinrichtung an einem vorderen Stabteil angreift, das endseitig sowohl gelenkig mit dem Kabinenboden als auch mit der Unterseite des Sitzteils in seinem vorderen Bereich verbunden ist und dabei das vordere Stabteil verschwenkt, kann der Sitz seine einzelnen Positionen einnehmen und ist über die angesprochenen Längsführungen entlang der Armauflagen zwangsgeführt. Mithin verwendet die in der Europäischen Anmeldeschrift aufgezeigte Lösung kein Stabtragwerk und ist auf eine Zwangsführung für den Bewegungsablauf angewiesen. Durch die schräg verlaufende Anordnung des rückwärtigen, in der Länge einstellbaren Stabteils, das im unteren Drittel des rückwärtigen Bereichs an der Rückenlehne angreift, ist auch wiederum viel Bauraum verschenkt, da es notwendig ist, die bewegbaren Komponenten über eine separate Abdeckung zu sichern, damit ein in der Reihe nachfolgender Sitzbenutzer nicht im Beinbereich beeinträchtigt oder gar verletzt werden kann.

Aufgabe der vorliegenden Erfindung ist es daher, bekannte Sitzsysteme dahingehend weiter zu verbessern, daß sie den gestiegenen Anforderungen an die Bequemlichkeit und den Sitzkomfort von Passagieren gerecht werden, daß sie hierbei wenig Bauraum einnehmen und den gestiegenen Anforderungen an die Crash - Sicherheit gerecht werden. Eine dahingehende Aufgabe löst ein Fahrzeugsitz mit den Merkmalen des Patentanspruches 1 in seiner Gesamtheit.

Dadurch, daß die jeweilige Gelenkstelle in diesem Bereich des Übergangs sowohl mit dem einen Ende eines oberen Stabteils verbunden ist, das längs des Sitzteils verläuft als auch mit dem Ende eines weiteren rückwärtigen Stabteits, daß das andere Ende des oberen Stabteils über eine weitere Gelenkstelle mit einem weiteren vorderen Stabteil verbunden ist, daß das rückwärtige und das vordere Stabteil zumindest teilweise das Sitzteil gegenüber dem Boden aufständem und daß zumindest das vordere Stabteil oder das rückwärtige Stabteil in der Länge einstellbar ist, ist in Abhängigkeit von der Anzahl der eingebrachten Gelenkstellen und Stabteile des Stabtragwerkes die Anzahl der Bewegungsmöglichkeiten und mithin die Bewegungsfreiheitsgrade für das Sitzteil gegenüber bekannten Lösungen deutlich erhöht, so daß in sehr weit gezogenen Einstellbereichen eine Positionierung des Sitzteils sowie der Rückenlehne möglich ist. Dabei übernimmt das Stabtragwerk mit seinen starren und in der Länge teilweise einstellbaren Stabteilen ausschließlich die Führung für das gesamte Bewegungskonzept, so daß auf zusätzliche und die Einstellbarkeit an sich einschränkende Zwangsführungen vollständig verzichtet werden kann.

Weiterhin ist es mit der beanspruchten Sitzkinematik möglich, die Verfahrbewegung des Sitzteils in mindestens eine der weiteren Positionen zu einem Absenken desselben gegenüber seiner Ausgangsposition zu nutzen, wobei dann das Sitzteil eine geneigte Stellung zum Herbeiführen einer Ruheposition für den Sitzbenutzer einnimmt. Dabei folgt die Rückenlehne durch die Schwenkbewegung des Stabtragwerks automatisch der Neigung des Sitzteils derart nach, daß eine schräg verlaufende Gesamtruhefläche als Ruheposition für den Sitzbenutzer erreicht ist. Demgemäß wird ein Fahrzeug- oder Fluggastsitz der sonst üblichen Art in eine Komplettliege für das Ruhen oder Schlafen umfunktioniert. Sofern dabei die Beinauflage gleichfalls automatisch über das Stabtragwerk geführt der Bewegung von Sitzteil und Rückenlehne nachfolgt, wird die angesprochene schräg verlaufende Ruhefläche nach unten in den Fußbereich hinein verlängert, so daß sich die vorstehend bezeichnete Schlafstätte derart vervollständigen läßt. Da das gesamte Stabtragwerk im wesentlichen unter dem Sitzteil seinen Platz findet, ist die erfindungsgemäße Lösung bauraumsparend und insofern bei beengten Einbauraumverhältnissen, wie sie in Flugzeugen od. dgl., gegeben sind, besonders geeignet. Durch die Realisierung des Stabtragwerkes mit seinen Stabteilen ist insbesondere in der Grundposition, bei der die Rückenlehne vollständig aufgerichtet ist, eine kompakte Baueinheit realisiert, die mit ihren Stabteilen sicherstellt, daß bei etwaig eingeleiteten Crashkräften in den Sitz diese sicher aufgenommen und in den Fahrzeug- oder Kabinenboden abgeleitet werden können, ohne daß es zu einem Abreißen von Teilen des Stabtragwerkes kommt oder gar zu einem Zusammenklappen der Sitzkomponenten, die durch das aufgespannte Stabtragwerk auseinandergehalten werden.

Vorzugsweise ist dabei des weiteren vorgesehen, daß zwischen der Ausgangsposition und der Ruheposition mindestens eine weitere Komfortposition einstellbar ist, bei der die hintere Sitzteilfläche gegenüber der vorderen Sitzteilfläche abgesenkt ist. Dies läßt beispielsweise ein entspanntes Arbeiten zu, wobei die Beine im vorderen Auflagebereich mit dem Sitzteil durch Anheben entsprechend entlastet werden können. Die angesprochenen Einstellvorgänge lassen sich in preisgünstiger Weise mit nur wenig Komponenten herbeiführen, so daß der erfindungsgemäße Fahrzeugsitz zum einen sich preisgünstig herstellen läßt und zum anderen konstruktiv leicht aufbaut, wobei letzteres insbesondere für den Einsatz in Flugzeugen eine Rolle spielt, um unnötiges Gewicht vermeiden zu helfen.

Der erfindungsgemäße Fahrzeugsitz braucht für seinen Einsatz nicht auf die Verwendung als Fluggastsitz eingeschränkt zu sein, sondern kann auch bei Schiffen, beispielsweise im Fährbetrieb, eingesetzt werden oder bei anderen Reisefahrzeugen, wie Zügen oder Omnibussen.

Vorzugsweise werden die eingesetzten Aktuatoren zum Erzeugen des Bewegungsablaufs für die Einstelleinrichtung pneumatisch angetrieben, wobei gegebenenfalls über Kolben-Zylindereinheiten mit pneumatischen Dämpfern Einschwingvorgänge beim Einstellen der Sitzkomponenten zueinander abgefedert werden. Ferner läßt sich bei einer bevorzugten Ausführungsform des erfindungsgemäßen Fahrzeugsitzes die Einstelleinrichtung zumindest mit Sitzteil und Rückenlehne als modulare Baukomponente aufbauen, die dann beispielsweise über eine Art Palettenzubringung vor Ort, also beispielsweise im Flugzeug, mit sonstigen Sitzteilkomponenten, wie den Sitzseitenteilen, mit Armauflagen od.dgl., für eine nachfolgende Sitzbenutzung verbindbar sind. Dies hat unter anderem auch den Vorteil, daß bei einer Änderung der Bestuhlung, beispielsweise bei einer Erhöhung der vorgesehenen Fahrzeugsitzzahl auf derselben Raumfläche, sich die erfindungsgemäßen Komfort-Fahrzeugsitze in übliche Sitze ohne erweiterte Ruheposition umbauen lassen. Femer kann die einem größeren Verschleiß unterliegende Sitzteil- und Rückenlehnenfläche an anderer Stelle gereinigt oder repariert, beispielsweise mit einem neuen Bezugsstoff versehen werden. Die ansonsten weniger dem Verschleiß oder der Verschmutzung unterliegenden Sitzteilkomponenten, die man in der Fachsprache auch mit Compartment bezeichnet, können dann im jeweiligen Fahrzeug, beispielsweise im Flugzeug, verbleiben und dort in kürzester Zeit mit einer neuen oder gewarteten Einstelleinrichtung mit Sitzteil und Rückenlehne ausgerüstet werden.

Im folgenden wird der erfindungsgemäße Fahrzeugsitz anhand einer Ausführungsform bezogen auf einen Fluggastsitz näher erläutert.
Es zeigen in prinzipieller und nicht maßstäblicher Darstellung die.
- Fig.1: einen Teil einer Fluggastsitz-Bestuhlung mit dem Fluggastsitz einmal in Sitzdarstellung gezeigt, einmal in der Ruheposition, wobei ein stehender und ein liegender Sitzbenutzer einen Anhalt im Hinblick auf die Größenverhältnisse und Anordnung der Bestuhlung geben;
- Fig.2: eine Seitendarstellung auf die wesentlichen Teile der Sitzkinematik und des Fluggastsitzes selbst;
- Fig.3: in verschiedenen Einstellpositionen einen Fluggastsitz nach der Fig.2.

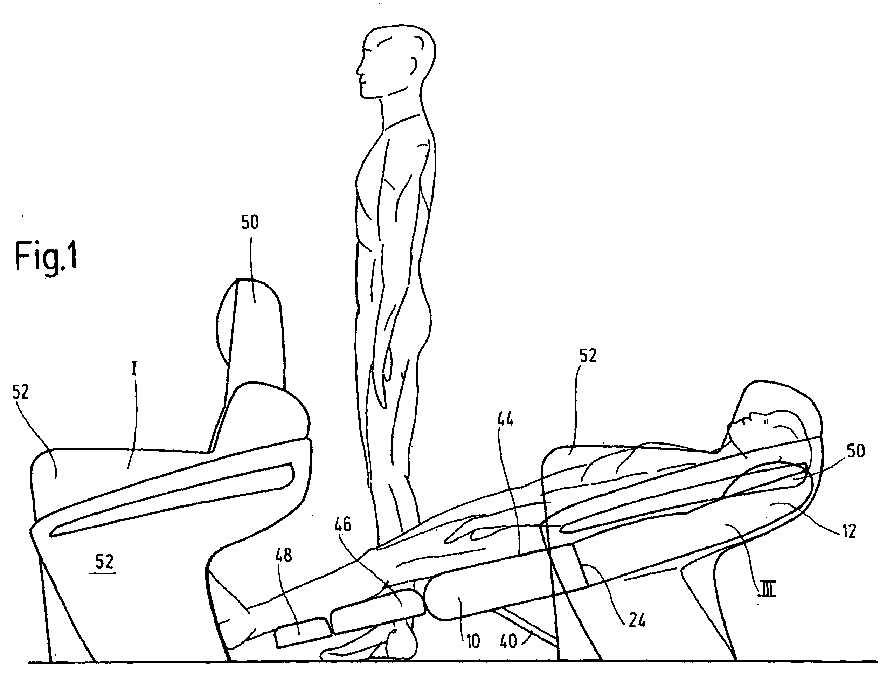

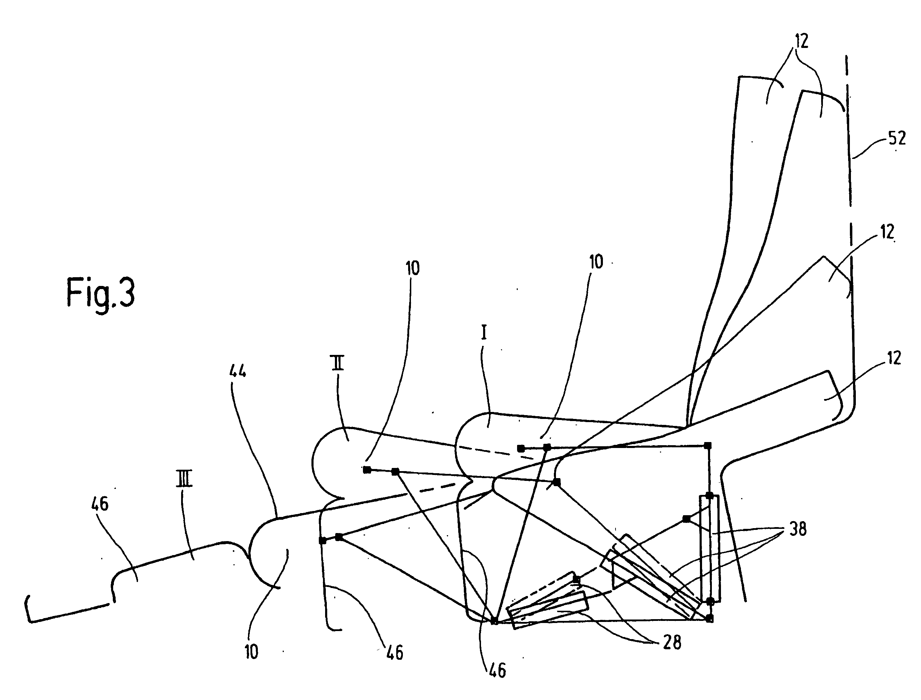

Der Fluggastsitz nach den Fig.1 bis 3 ist mit einem Sitzteil 10 sowie einer Rückenlehne 12 versehen. In üblicher und daher nicht mehr näher beschriebener Art und Weise weisen sowohl das Sitzteil 10 als auch die Rükkenlehne 12 entsprechende Polsterungen und ergonomisch günstige Sitzkonturen auf. Sowohl Sitzteil 10 als auch Rückenlehne 12 sind über eine als Ganzes mit 14 bezeichnete Einstelleinrichtung relativ zueinander bewegbar gehälten. Die Einstelleinrichtung 14 weist mehrere Gelenkstellen 16 auf, die untereinander über ein als Ganzes mit 18 bezeichnetes Stabtragwerk miteinander verbunden sind, das unter anderem das Sitzteil 10 trägt und das mittels einer Betätigungseinrichtung 20 derart eine Verfahrbewegung, insbesondere in Form einer Schwenkbewegung, ausführt, daß das Sitzteil 10 aus einer Ausgangsposition I gemäß der Darstellung nach der Fig.3 in zwei weitere Positionen II und III bringbar ist, wobei durch Umkehr der Bewegungsrichtung die ursprüngliche Ausgangsposition I wieder einnehmbar ist.

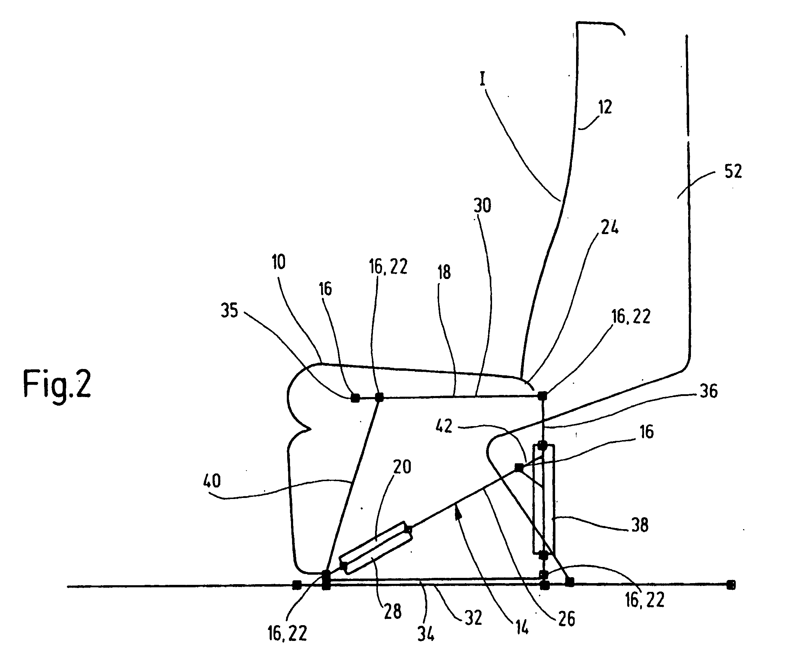

Wie insbesondere die Fig.2 zeigt, sind vier Gelenkstellen 16 an den vier Eckpunkten 22 des Stabtragwerkes 18 angeordnet, wobei mindestens eine Gelenkstelle 16 im Bereich des Überganges 24 zwischen Rückenlehne 12 und Sitzteil 10 vorgesehen ist. Im Bereich des dahingehenden Überganges 24 kann die angesprochene eine Gelenkstelle 16 an einen Sitzteilbeschlag od.dgl. angreifen oder Teil desselben sein, der eine Zwangsführung bei der gewünschten Einstellbewegung zwischen Sitzteil 10 und Rückenlehne 12 herstellt.

Das Stabtragwerk 18 weist ein in der Länge einstellbares Stabteil 26 auf, das mit einem Aktuator 28 zusammenwirkt, der, vorzugsweise in Form einer Pneumatik-Kolben-Zylindereinheit in Blickrichtung auf die Fig.2 gesehen, sich zwischen einem oberen starren Stabteil 30 und einem darunterliegenden unteren starren Stabteil 32 innerhalb des Stabtragwerkes 18 schräg verlaufend erstreckt. Das obere starre Stabteil 30 greift in das Sitzteil 10 ein und ist derart von diesem umpotstert. Durch das dahingehende Übergreifen des Sitzteils 10 sind jedoch die Gelenkstellen 16 und das zuordenbare Stabtragwerk 18 in ihrer freien gewünschten Bewegung nicht gehindert. Das untere starre Stabteil 32 ist, ebenso wie das obere starre Stabteil 30, in seiner Länge nicht einstellbar oder veränderbar, wobei das untere Stabteil 32 über eine übliche Sitzschiene 34, die mit Teilen des Flugzeugbodens verbunden ist, zur Aufständerung des Fluggastsitzes über dem Bodenbereich dient. In Verlängerung des oberen Stabteils 30 ist an seinem vorderen Ende eine weitere Gelenkstelle 16 als Anlenkstelle 35 mit dem Sitzteil 10 vorhanden.

Das Stabtragwerk 18 weist ein weiteres, in der Länge einstellbares rückwärtiges Stabteil 36 auf, das mit einem Ausgleichsteil 38 zusammenwirkt, an dem mittels einer weiteren Gelenkstelle 16 der Aktuator 28 mit seinem Betätigungsteil in Form des Stabteils 26 angreift. Das gegenüberliegende Ende des angesprochenen Aktuators 28 steht wiederum in Verbindung mit der vorderen Gelenkstelle 16 des unteren starren Stabteils 32. Die zuletzt genannte Gelenkstelle 16 des unteren Stabteils 32 ist wiederum mit der zugeordneten, darüberliegenden Gelenkstelle 16 des oberen Stabteils 30 mittels eines weiteren starren vorderen Stabteils 40 gelenkig verbunden. Die dahingehende Anlenkung mit dem oberen starren Stabteil 30 erfolgt über die Gelenkstelle 16, die den vorderen oberen Eckpunkt 22 des Stabtragwerkes 18 besetzt hält. Auch das Ausgleichsteil 38 stellt, wie der Aktuator 28, eine Kolben-Zylindereinheit dar, die jedoch diesmal über eine pneumatische Dämpfungseinrichtung verfügt und somit unerwünschten Schwingbewegungen beim Einstellen des Sitzes über das Stabtragwerk 18 entgegenwirkt. Dahingehende Dämpfungseinrichtungen und Kolben-Zylindereinheiten sind im Stand der Technik als Einstellmittel bekannt auch im Bereich der Fahrzeugsitze, so daß an dieser Stelle hierauf im einzelnen nicht mehr näher eingegangen wird.

Das angesprochene Stabtragwerk 18 als Ganzes, ebenso wie die als Ganzes mit 14 bezeichnete Einstelleinrichtung, können einfach an den Sitzkomponenten des Fahrzeugsitzes angreifen. Es kann aber insbesondere in Hintereinanderanordnung in dahinter und davor liegenden Zeichenebenen zu der Darstellung nach der Fig.2 die beschriebene Anordnung deckungsgleich zwei- oder mehrfach vorhanden sein, wobei beispielsweise in den Bereichen der beiden Längsränder des Sitzes sich jeweils ein Stabtragwerk 18 (nicht näher dargestellt) befinden kann, das dann von zentraler Stelle aus von einem Aktuator 28 zu betätigen ist, indem man die in einer Linie hintereinander angeordneten Gelenkstellen 16 mit Querstäben aussteift. Letzteres ist auch insofern vorteilhaft, als dann auch in Querrichtung, also quer zur Sitzfläche gesehen, sich das Stabtragwerk 18 fortsetzt und derart zur Aussteifung der Sitzkonstruktion mit beiträgt. Die angesprochenen Stabteile des Stabtragwerkes 18 brauchen darüber hinaus nicht stab- oder rohrartig zu sein, sondern können beispielsweise aus geometrisch ausgeformten Trägern, beispielsweise aus Aluminium-Druckgußmaterial od.dgl. bestehen.

In der Ausgangsposition I des Fluggastsitzes, wie sie in der Fig.2 dargestellt ist, ist das Stabtragwerk 18 in der Art eines Trapezes ausgebildet, wobei seine beiden parallel zueinander verlaufenden Grundlinien aus dem oberen starren Stabteil 30 und dem unteren starren Stabteil 32 gebildet sind. Die beiden nicht zueinander parallelen Schenkel des Trapezes sind wiederum durch die Stabteile 40 und 36 mit Ausgleichsteil 38 gebildet. Für den Angriff des Aktuators 28 über sein ein- und ausfahrbares Stabteil 26 an dem Gehäuse des Ausgleichsteils 38 dient eine stabartige Dreiecksaufnahme 42, die an ihrem freien Ende mit der Gelenkstelle 16 für einen Übergang zum Stabteil 26 versehen ist. In der Ausgangsposition I schließt das rückwärtige Stabteil 36 mit seinem Ausgleichsteil 38 zur Sitzschiene 34 hin bzw. zum Aufstellboden des Luftfahrzeuges einen Winkel von 90° ein. Demgegenüber ist der eingeschlossene Winkel zwischen dem Stabteil 26 mit Aktuator 28 und der Sitzschiene 34 bzw. dem Boden bei etwa 30° liegend.

Wird vorzugsweise über den Sitzbenutzer der Aktuator 28 über eine nicht näher dargestellte Betätigungseinrichtung für einen Sitzeinstellvorgang angesteuert, sorgt die Pneumatik dafür, daß das Stabteil 26 in den Aktuator 28 eingezogen wird mit der Folge, daß um die unteren Gelenkstellen 16 im Übergangsbereich des Stabtragwerkes 18 zu der Sitzschiene 34 die Stabteile 40 und 36 mit Ausrichtteil 38 entgegen dem Uhrzeigersinn verschwenken und dabei über das obere Stabteil 30 das Sitzteil 10 in Blickrichtung auf die Fig.3 gesehen nach vorne und unten mitführen, bis beispielsweise die Komfortposition II erreicht ist. In der dahingehenden Komfortposition II ist die hintere Sitzteilfläche, wie dargestellt, gegenüber der vorderen Sitzteilfläche abgesenkt und über die nicht näher dargestellten Sitzteilbeschläge nimmt die hintere obere Gelenkstelle 16 am Eckpunkt 22 des Stabtragwerkes 18 die Rückenlehne 12 derart mit, daß sie in eine geneigte Stellung nach der Darstellung gemäß der Fig.3 übergeht. Für die dahingehende Verlagerungsbewegung fährt das rückwärtige Stabteil 36 vorzugsweise gedämpft aus dem Ausgleichsteil 38 über eine vorgebbare Wegstrecke aus. Ferner schwenkt bei der dahingehenden Verfahrbewegung das Ausgleichsteil 38 um die untere Gelenkstelle 16 entgegen dem Uhrzeigersinn und der Aktuator 28 um seine untere Gelenkstelle 22 im Uhrzeigersinn um eine vorgegebene Wegstrecke.

Wird der Verfahrvorgang fortgeführt, nimmt das Sitzteil 10 in der Ruheposition III eine geneigte Stellung ein, wobei die Rückenlehne 12 über die bereits angesprochene Führung bedingt durch die Schwenkbewegung des Stabtragwerkes 18 der Neigung des Sitzteiles 10 derart nachfolgt, daß insgesamt eine schräg verlaufende Ruhefläche 44 (vgl. auch Fig.1) für den Sitzbenutzer erreicht ist, wobei die dahingehende Ruhefläche 44 gegenüber der Bodenfläche, auf dem der Sitz angeordnet ist, einen Winkel von etwa 15° einschließt, sofern die dahingehende Ruhefläche in Richtung des Bodens entweder über die Beinauflage 46 oder fiktiv nach unten hin verlängert ist. Die Beinauflage 46 selbst kann gleichfalls wiederum geführt, beispielsweise über entsprechende, nicht näher dargestellte Beschlagteile der Bewegung von Sitzteil 10 und Rückenlehne 12 folgen, um insgesamt die schräg verlaufende Ruhefläche 44 zu erhalten. Dabei kann die Beinauflage 46 nach unten hin über eine Wadenauflage 48 verfügen und die Rückenlehne 12 weist vorzugsweise integriert eine Kopfstütze 50 auf für die Aufnahme und Abstützung des Kopfes des Sitzbenutzers in der Ruhe- oder Schlafposition III, wie sie in der Fig.1 angedeutet ist.

Über die angesprochene Sitzkinematik mit Stabtragwerk 18 und Einstelleinrichtung 14 mit einem Antriebsmotor in Form des Aktuators 28 bzw. einem Trimmotor in Form des Ausgleichsteils 38 lassen sich die verschiedenen Positionen I, II und III reversibel einnehmen. Dabei kommt als Stabtragwerk 18 im wesentlichen ein Viergelenk in Ansatz, das sich besonders kostengünstig realisieren läßt und dennoch eine sichere Krafteinleitung in das Sitzgrundgestell, beispielsweise im Fall eines Crashs od.dgl. erlaubt. Anstelle der angesprochenen pneumatischen Komponenten 28 und 38 läßt sich die Motor- und Trimmfunktion auch über sonstige Antriebsmittel, beispielsweise in Form von Elektromotoren und Spindeltrieben (nicht dargestellt), realisieren.

Durch die gezeigte Absenkung des Sitzniveaus in der Bett- oder Ruheposition III wird im Bereich des Sitzteils 10, das schräg nach unten geneigt ist, eine niedrige Überstiegshöhe ermöglicht, so daß für einen weiteren Sitzbenutzer in einer Sitzreihe es einfach möglich ist, die in der Reihe ruhende Person bei Bedarf zu übersteigen, ohne den Ruhenden zu stören. Die Kinematik über das trapezartige Stabtragwerk 18 ist derart ausgelegt, daß mit nur geringen Einstellbewegungen am Viergelenk sich der Fahrzeugsitz mit seinen Einstellungen in einer sehr breiten Variationsbreite verändern läßt, wobei die jeweilige Einstellung sich aufgrund der kurzen zurückgelegten Schwenk- und Verfahrbewegungen rasch realisieren läßt. Durch einfaches Hin- und Herschwenken, insbesondere der Stabteile 40 und 36, ist der weitgehende Einstellbereich in beiden Richtungen realisierbar.

Besonders vorteilhaft ist des weiteren, daß die Einstelleinrichtung 14 zusammen mit dem Sitzteil 10, der Rückenlehne 12 sowie der Beinauflage 46 eine modulare Baukomponente ausbildet, die vor Ort mit sonstigen Sitzteilen, wie den Sitzseitenteilen 52 (vgl. Fig.1), für eine Sitzbenutzung lösbar verbindbar ist. Es ist also möglich, die Sitzseitenteile 52 in der Art eines Compartments im Flugzeug zu belassen und nur die Funktionseinheit, die die Positionen I bis III sicherstellt, beispielsweise zu Wartungszwecken auszutauschen. Dabei kann das angesprochene Compartment in Fällen von Sitzseitenteilen 52 eine Mehrfachfunktion ausüben und derart weiter ausgebildet sein, daß ein abgeschlossener Bereich (nicht dargestellt) für den Sitzbenutzer gewährleistet ist, der ein hohes Maß an Privatsphäre erlaubt, wobei das Compartment durchaus auch mit einem Barbereich, einer Waschgelegenheit od.dgl., ergänzt sein kann. Ferner können Arbeitshilfen, wie Computer oder spezielle Anschlüsse für Notebooks, aus einem dahingehenden abgeschlossenen Bereich einen Arbeitsplatz mit Ruhe- und Schlafmöglichkeit entstehen lassen. Insbesondere Passagieren auf langen Reisen ist derart geholfen und Ermüdungserscheinungen kann man derart wirksam begegnen.

## Patentansprüche

1. Fahrzeugsitz, insbesondere Fluggastsitz, mit einem Sitzteil (10) und einer Rückenlehne (12), die über mindestens eine Einstelleinrichtung (14) relativ zueinander bewegbar gehalten sind, wobei die jeweilige Einstelleinrichtung (14) mehrere Gelenkstellen (16) aufweist, die zumindest teilweise über ein Stabtragwerk (18) mit einzelnen Stabteilen (26,30,32, 36 und 40) miteinander verbunden sind, das das Sitzteil (10) gegenüber einem Fahrzeug- oder Kabinenboden aufständert, und das mittels einer Betätigungseinrichtung (20) derart eine Verfahrbewegung ausführt, daß das Sitzteil (10) aus einer Ausgangsposition (I) in mindestens eine weitere Position (II, III) und umgekehrt bringbar ist, wobei zumindest teilweise an den Eckpunkten (22) des Stabtragwerkes (18) die Gelenkstellen (16) angeordnet sind und wobei mindestens eine Gelenkstelle (16) im Bereich des Übergangs (24) zwischen Rückenlehne (12) und Sitzteil (10) vorgesehen ist, die jeweilige Gelenkstelle (16) in diesem Bereich des Übergangs (24) mit dem Ende eines weiteren rückwärtigen Stabteils (36) verbunden ist, und wobei ein Ende eines oberen Stabteils (30), das längs des Sitzteils (10) verläuft über eine weitere Gelenkstelle (16) mit einem weiteren vorderen Stabteil (40) verbunden ist, und wobei das rückwärtige und das vordere Stabteil (36,40) zumindest teilweise das Sitzteil (10) gegenüber dem Boden aufständern und wobei zumindest das vordere Stabteil (40) oder das rückwärtige Stabteil (36) in der Länge einstellbar ist, **dadurch gekennzeichnet, daß** die jeweilige Gelenkstelle (16) im Bereich des Übergangs (24) auch mit dem anderen Ende des Oberen Stabteils (30) verbunden ist.

2. Fahrzeugsitz nach Anspruch 1, **dadurch gekennzeichnet, daß** das Stabtragwerk (18) mindestens ein weiteres in der Länge einstellbares Stabteil (26) aufweist, das mit einem Aktuator (28) zusammenwirkt, der zwischen dem oberen starren Stabteil (30) im Bereich des Sitzteils (10) und einem darunterliegenden unteren starren Stabteil (32) innerhalb des Stabtragwerkes (18) angeordnet ist.

3. Fahrzeugsitz nach Anspruch 1 oder 2, **dadurch gekennzeichnet, daß** das in der Länge einstellbares rückwärtige Stabteil (36) ein Ausgleichsteil (38) aufweist, an dem mittels einer weiteren Gelenkstelle (16) der Aktuator (28) mit seinem Betätigungsteil angreift und daß das gegenüberliegende Ende des Aktuators (28) in Verbindung ist mit der Gelenkstelle (16) des unteren Stabteils (32), das mit der zugeordneten Gelenkstelle (16) des oberen Stabteils (30) mittels des vorderen starren Stabteils (40) verbunden ist.

4. Fahrzeugsitz nach Anspruch 3, **dadurch gekennzeichnet, daß** das Ausgleichsteil (38) sowie der Aktuator (28) aus einer Kolben-Zylindereinheit besteht, daß das Ausgleichsteil (38) vorzugsweise mit einer Dämpfungseinrichtung versehen ist und daß der Aktuator (28) pneumatisch ansteuerbar ist.

5. Fahrzeugsitz nach einem der Ansprüche 1 bis 4, **dadurch gekennzeichnet, daß** das Stabtragwerk (18) zumindest in der Ausgangsposition (I) in der Art eines Trapezes angeordnet ist und daß seine beiden Grundlinien aus starren Stabteilen (30, 32) bestehen.

6. Fahrzeugsitz nach einem der Ansprüche 1 bis 5, **dadurch gekennzeichnet, daß** die Verfahrbewegung des Sitzteils (10) in mindestens eine der weiteren Positionen (II, III) zu einem Absenken desselben gegenüber seiner Ausgangsposition (I) führt und daß dabei das Sitzteil (10) eine geneigte Stellung zum Herbeiführen einer Ruheposition (III) für den Sitzbenutzer einnimmt.

7. Fahrzeugsitz nach Anspruch 6, **dadurch gekennzeichnet, daß** die Rükkenlehne (12) über eine Zwangsführung bedingt durch eine Schwenkbewegung des Stabtragwerkes (18) der Neigung des Sitzteils (10) derart nachfolgt, daß eine schräg verlaufende Ruhefläche (44) als Ruheposition für den Sitzbenutzer erreicht ist.

8. Fahrzeugsitz nach Anspruch 7, **dadurch gekennzeichnet, daß** eine Beinauflage (46) gleichfalls geführt der Bewegung von Sitzteil (10) und Rükkenlehne (12) nachfolgt und die schräg verlaufende Ruhefläche (44) nach unten verlängert.

9. Fahrzeugsitz nach einem der Ansprüche 6 bis 8, **dadurch gekennzeichnet, daß** zwischen der Ausgangsposition (I) und der Ruheposition (III) mindestens eine weitere Komfortposition (II) einstellbar ist, bei der die hintere Sitzteilfläche gegenüber der vorderen Sitzteilfläche abgesenkt ist.

10. Fahrzeugsitz nach einem der Ansprüche 1 bis 9, **dadurch gekennzeichnet, daß** die Einstelleinrichtung (14) zumindest mit Sitzteil (10) und Rükkenlehne (12) als modulare Baukomponente aufgebaut austauschbar mit sonstigen Sitzteilen, wie den Sitzseitenteilen (52) vor Ort, für eine Sitzbenutzung verbindbar ist.

## Claims

1. A vehicle seat, especially for aircraft, comprising a seat part (10) and a backrest (12) that can be displaced relative to each other by means of at least one adjustment device (14). The respective adjustment device is provided with a plurality of articulation points (16) that are at least partially interconnected via a bar-type supporting frame (18) with individual bar elements (26, 30, 32, 36 and 40). Said supporting frame raises and supports the seat part (10) relative to the vehicle or cabin floor and effects a displacement movement by means of an actuator device (20) in such a manner that the seat part (10) can be brought from an initial position (I) into at least one further position (II, (III) and back again, whereby articulation points (16) are positioned at least in part at the comer points (22) of the bar-type supporting frame (18), and whereby at least one articulation point (16) is incorporated within the transition area (24) between the backrest (12) and the seat part (10), whereby the relevant articulation point (16) within this transition area (24) is connected to an end of a further reverse-orientated bar part (36) that runs along the seat part (10), and whereby one end of an upper bar part (30) is connected via a further articulation point (16) with a further frontal bar part (40), and whereby the reverse-orientated and the frontal bar part (36, 40) at least partially displace the seat part (10) relative to the vehicle floor, and whereby at least the frontal bar part (40) or the reverse-orientated bar part (36) are adjustable in a longitudinal direction, **characterised in that** the relevant articulation point (16) within the transition area (24) is also connected with the other end of the upper bar part (30).

2. A vehicle seat according to Claim 1, **characterised in that** the bar-type supporting frame (18) incorporates at least one further longitudinally adjustable bar part (26) which acts cooperatively with an actuator (28), which in turn is positioned between the upper fixed bar part (30) within the area of the seat part (10) and a lower fixed bar part (32) that is positioned below the same within the bar-type supporting frame (18).

3. A vehicle seat according to Claim 1 or 2, **characterised in that** the longitudinally adjustable reverse-orientated bar part (36) further incorporates a balancing part (38) which is interconnected with the actuator part of the actuator (28) via a further articulation point (16), and **in that** the opposing end of the actuator (28) is connected to the articulation point (16) of the lower bar part (32) which is in turn connected with the relevant allocated articulation point (16) of the upper bar part (30) via the frontal fixed bar part (40).

4. A vehicle seat according to Claim 3, **characterised in that** the balancing part (38) as well as the actuator (28) consist of a piston/cylinder unit and **in that** the said balancing part (38) is further preferably equipped with a buffer unit, and **in that** the actuator (28) is pneumatically controlled.

5. A vehicle seat according to one of the preceding Claims 1 to 4, **characterised in that** the bar-type supporting frame (18) is arranged in a trapezoidal fashion at least in its initial position (I), and **in that** its two base lines consist of fixed bar parts (30, 32).

6. A vehicle seat according to one of the preceding Claims 1 to 5, **characterised in that** the displacement movement of the seat part (10) in at least one of the further positions (II, III) will lead to a lowering of the same with relation to its initial position (I), and **in that** the seat part (10) is thereby placed in a lowered position that will enable the user of the seat to adopt a resting position (III).

7. A vehicle seat according to Claim 6, **characterised in that** the backrest (12) follows the declining angle of the seat part (10) with the aid of a forced movement that follows a tilting movement of the bar-type supporting frame (18) in such a way that an inclined resting area (44) is achieved and forms the resting position for the user of the seat.

8. A vehicle seat according to Claim 7, **characterised in that** a leg rest (46) is also forced to follow the movement of the seat part (10) and the backrest (12), and **in that** the inclined resting area (44) is extended in a downward direction.

9. A vehicle seat according to one of the preceding Claims 6 to 8, **characterised in that** at least one further comfortable position (II) can be adjusted between the initial position (I) and the resting position (III), in which the rear seat part area is lowered in relation to the frontal seat part area.

10. A vehicle seat according to one of the preceding Claims 1 to 9, **characterised in that** the adjustment device (14) is interchangeably affixed in the form of a modular build component at least with regard to the seat part (10) and the backrest (12), i.e. exchangeable with other seat parts such as the seat side parts (52), so that these can be interconnected for various uses when required.

## Revendications

1. Siège de véhicule, en particulier siège de passager d'avion, avec un élément d'assise (10) et un dossier (12) qui sont relativement mobiles l'un par rapport à l'autre par l'intermédiaire d'un dispositif de réglage (14), moyennant quoi chacun des dispositifs de réglage (14) comporte plusieurs points articulés (16) qui sont raccordés au moins partiellement entre eux par l'intermédiaire d'une structure porteuse à tiges (18) avec diverses tiges (26, 30, 32, 36 et 40) qui surélève l'élément d'assise (10) par rapport à un plancher de véhicule ou de cabine et qui exerce un mouvement de déplacement au moyen d'un dispositif d'actionnement (20) de telle sorte que l'élément d'assise (10) peut être amené d'une position de départ (I) à au moins une autre position (II, III) et vice-versa, moyennant quoi les points articulés (16) sont au moins partiellement disposés sur les coins (22) de la structure porteuse à tiges (18) et moyennant quoi au moins un point articulé (16) est prévu dans la zone de transition (24) entre le dossier (12) et l'élément d'assise (10), le point articulé (16) correspondant dans cette zone de transition (24) est raccordé à une extrémité d'une autre tige arrière (36), et moyennant quoi une extrémité d'une tige supérieure (30) qui court le long de l'élément d'assise (10) est raccordée par l'intermédiaire d'un autre point articulé (16) à une autre tige avant (40) et moyennant quoi la tige arrière et la tige avant (36, 40) surélèvent au moins partiellement l'élément d'assise (10) par rapport au plancher et moyennant quoi au moins la tige avant (40) ou la tige arrière (36) est réglable en longueur, **caractérisé en ce que** chacun des points articulés (16) est également raccordé à l'autre extrémité de la tige supérieure (30) dans la zone de transition (24).

2. Siège de véhicule selon la revendication 1, **caractérisé en ce que** la structure porteuse à tiges (18) comporte au moins une autre tige (26) réglable en longueur, qui agit en liaison avec un actionneur (28)qui est disposé au sein de la structure porteuse à tiges (18), entre la tige rigide supérieure (30) dans la zone de l'élément d'assise (10) et une tige rigide inférieure (32) située en dessous.

3. Siège de véhicule selon les revendications 1 ou 2, **caractérisé en ce que** la tige arrière (36), réglable en longueur, comporte un élément de compensation (38) sur lequel l'actionneur (28) avec son élément d'actionnement est en prise au moyen d'un autre point articulé (16) et que l'extrémité opposée de l'actionneur (28) est en liaison avec le point articulé (16) de la tige inférieure (32) qui est raccordée au point articulé (16) associé de la tige supérieure au moyen de la tige rigide avant (40).

4. Siège de véhicule selon la revendication 3, **caractérisé en ce que** l'élément de compensation (38) ainsi que l'actionneur (28) sont constitués d'une unité piston-cylindre, **en ce que** l'élément de compensation (38) est de préférence pourvu d'un dispositif d'amortissement et **en ce que** l'actuator (28) peut être commandé de manière pneumatique.

5. Siège de véhicule selon l'une quelconque des revendications 1 à 4, **caractérisé en ce que** la structure porteuse à tiges (18) est disposée, au moins dans sa position de départ (I), à la manière d'un trapèze et que ses deux lignes de base sont constituées de tiges rigides (30, 32).

6. Siège de véhicule selon l'une quelconque des revendications 1 à 5, **caractérisé en ce que** le mouvement de déplacement de l'élément d'assise (10) entraîne, dans au moins une des autres positions (II, III), un abaissement de ce dernier par rapport à sa position de départ (I) et **en ce qu'**à cette occasion le siège de véhicule (10) se met en position inclinée pour engendrer une position de repos (III) pour l'utilisateur du siège.

7. Siège de véhicule selon la revendication 6, **caractérisé en ce que** le dossier (12) suit l'inclinaison de l'élément d'assise (10) par guidage forcé conditionné par un mouvement de pivotement de la structure porteuse à tiges (18), de telle sorte qu'une surface de repos (44) inclinée est obtenue en tant que position de repos pour l'utilisateur du siège.

8. Siège de véhicule selon la revendication 7, **caractérisé en ce qu'**un repose-pied (46), guidé de la même manière, suit le mouvement de l'élément d'assise (10) et du dossier (12) et prolonge la surface de repos inclinée (44) vers le bas.

9. Siège de véhicule selon l'une quelconque des revendications 6 à 8, **caractérisé en ce qu'**entre la position de départ (I) et la position de repos (III) au moins une autre position de confort (II) est réglable, lors de laquelle la surface arrière de l'élément d'assise est abaissée par rapport à la surface avant de l'élément d'assise.

10. Siège de véhicule selon l'une quelconque des revendications 1 à 9, **caractérisé en ce que** le dispositif de réglage (14) est structuré en tant qu'élément de construction modulaire au moins avec l'élément d'assise (10) et le dossier (12) et peut être remplacé sur place par d'autres éléments d'assise, tels les éléments d'assise latéraux (52) et qu'il est raccordable pour une utilisation de siège.
